# FASCICULE DE BREVET EUROPEEN

(11) **EP 0 846 882 B1**
(45) Date de publication et mention de la délivrance du brevet: **02.05.2003**
(21) Numéro de dépôt: 97402928.2
(22) Date de dépôt: 04.12.1997
(51) Int. Cl.: F16D 3/78, F16D 3/60

(54) **Dispositif d'accouplement flexible de deux arbres tournants**
Elastische Kupplung für drehende Wellen
Flexible coupling for rotating shafts

(30) Priorité: 05.12.1996 FR 9614924
(43) Date de publication de la demande: 10.06.1998
(73) Titulaire: Hispano Suiza, 92700 Colombes (FR)
(72) Inventeur: Deperrois, André, Raymond, Christian, 75014 Paris (FR); Lefranc, Bénédicte, Anne, Marie, 92110 Clichy (FR); Pettinotti, Serge, Dominique, 92400 Courbevoie (FR)
(74) Mandataire: Berrou, Paul

(56) Documents cités:
- FR-A- 607 804
- FR-A- 1 380 185
- FR-A- 1 470 545
- US-A- 3 733 066
- US-A- 4 946 421
- US-A- 5 330 387

## Description

L'invention se rapporte aux dispositifs d'accouplement flexible de deux arbres tournants et plus particulièrement mais non exclusivement aux dispositifs de ce type utilisés en aéronautique, de tels dispositifs comportant habituellement un organe flexible métallique lié de façon rigide à chacun des arbres.

Les accouplements dits flexibles sont des moyens bien connus pour lier en rotation deux arbres susceptibles de présenter un désalignement de leurs axes respectifs ou un écart dans le positionnement de ces arbres le long de leurs axes. Les accouplements flexibles utilisés en aéronautique doivent présenter des performances élevées sous un encombrement réduit, avec cependant un désalignement des arbres faible et un faible décalage axial de ces arbres et une grande rigidité en rotation. De tels accouplements dont le diamètre peut être inférieur à 100 mm transmettent couramment un couple de 1000 Mn (mètre x newton) à des vitesses de 20 000 tours/mn, à des températures atteignant 150°C, et doivent présenter une fiabilité totale pendant une durée d'utilisation prédéterminée. Une bonne tenue aux comportements vibratoires est aussi exigée.

De tels accouplements comportent habituellement un organe flexible métallique, des moyens de liaison de l'organe flexible à ces arbres, ainsi que des moyens pour réduire les vibrations dans l'accouplement.
Lorsque l'accouplement est susceptible d'être utilisé dans les deux sens de rotation, l'organe flexible comporte des éléments déformables qui sont sollicités en traction dans un sens de rotation et en compression dans l'autre, ainsi que d'autres éléments déformables sollicités d'une manière opposée.

On connait par le brevet FR 2 409 417 un dispositif d'accouplement dont l'organe flexible comporte un empilement de lames d'acier à ressort maintenues écartées entre elles et solidement boulonnées sur deux plateaux en bout de chacun des arbres. Dans une première forme de réalisation, ces lames ont la forme générale d'un polygone convexe régulier, l'écartement de ces lames étant assuré par des rondelles. Dans une seconde forme de réalisation, les lames se présentent sous la forme de segments disposés selon les côtés d'un polygone régulier et boulonnés à leurs extrémités sur les deux plateaux, les lames d'un côté permettant de maintenir écartées par imbrication les lames des deux côtés adjacents. Dans les deux cas, une matière amortissante est disposée entre les lames aux endroits ou celles-ci sont susceptibles de vibrer, afin de réduire ces vibrations, génératrices de fatigue de la matière ainsi que les frottements mutuels qui en résultent, ces frottements étant générateurs d'usure des lames.

On connait aussi par le brevet US 4 946 421 un accouplement dont les éléments flexibles sont des câbles formant des coudes. De tels accouplements présentent une souplesse en rotation, amortissent les vibrations dans la transmission du couple et autorisent un important désalignement des arbres.

On connait aussi par le brevet US 4 790 794 un accouplement comportant une pluralité de courroies souples entourant deux à deux les zones de fixation de l'organe flexible. Ces courroies sont habituellement réalisées dans un matériau organique à faible module d'élasticité et l'organe flexible est surmonté dans un élastomère.

Lorsque la transmission du couple se fait de façon rigide, c'est à dire sans élasticité en torsion, les éléments déformables qui sont sollicités en compression peuvent faire l'objet d'une déformation d'instabilité appelée flambement.

Le flambement apparait lorsque le couple transmis dépasse un seuil qui est fonction de la géométrie de l'accouplement et des modules d'élasticité des matériaux employés.

Il est bien connu que le flambement provoque des contraintes très importantes, et l'expérience monte que les ruptures sur les accouplements se produisent préférentiellement sur les éléments déformables en compression. Ce phénomène concerne typiquement les accouplements à lames métalliques tel que celui qui est divulgué par le brevet FR 2 409 417 cité plus haut.

L'accouplement divulgué par le brevet FR 1 380 185 ne présente pas cet inconvénient, car la forme coudée des câbles permet le fléchissement sans flambement de ceux-ci, mais ce fléchissement ne permet pas de transmettre des couples importants et donnent à l'accouplement une souplesse en rotation non désirée.

Dans l'accouplement divulgué par le brevet US 4 790 794, les segments de courroies en compression flambent, mais sans que cela génère de contraintes importantes, car ces courroies sont minces et souples. De tels accouplements ne présentent cependant pas les performances requises. En effet, le couple transmis ne peut être que réduit en regard de l'encombrement de l'accouplement, car :
- les courroies en matériau organique ont une résistance inférieure à des barreaux métalliques de mêmes dimensions,
- dans le cas où on utiliserait des éléments métalliques, par exemple des câbles, ceux-ci auraient nécessairement une section très réduite comparée à leur longueur, afin de réduire les contraintes de flambement, ce qui réduit l'aptitude de l'accouplement à transmettre un couple important sous un volume réduit. On remarquera aussi que l'utilisation de matériaux organiques n'autorise qu'un fonctionnement à des températures très inférieures aux températures de fonctionnement des accouplements métalliques.

On connaît par le brevet FR 607.804 un accouplement flexible constitué par un câble métallique circulaire lié en deux points diamétralement opposés aux extrémités d'une fourche associée à l'un des arbres et en deux autres points aux extrémités d'une seconde fourche associée à l'autre arbre, la liaison s'effectuant par le serrage du câble entre les extrémités des fourches et des chapeaux rapportés à l'aide de vis. Le brevet indique également page 1 lignes 60-61 que l'accouplement a l'avantage de produire "un entraînement sans brutalité au démarrage" ce qui signifie qu'il présente également une souplesse en rotation contraire au résultat recherché par l'invention faisant l'objet de la présente de brevet.

On connaît également par les brevets US 5,330,387 et FR 1.470.545 des accouplements flexibles constitués de câbles circulaires entourant deux par deux des douilles que l'on peut fixer à chacun des arbres, les câbles et les douilles étant noyés dans un bloc en caoutchouc. Au contraire de ce que les figures laissent penser, de tels accouplements présentent également une souplesse en rotation car les câbles ne sont que faiblement tenus par le, caoutchouc et ils tendent de ce fait à s'incurver pour reprendre leur forme circulaire initiale, ce phénomène étant d'autant plus marqué que les câbles sont durs afin de pouvoir transmettre des couples importants sous un faible volume.

Pour résoudre ce problème, l'invention propose un accouplement flexible de deux arbres tournants dont l'organe flexible comporte des zones de liaison par lesquelles il est relié aux arbres, lesdites zones de liaison étant elles-mêmes reliées entre elles deux à deux par des zones de déformation comportant chacune au moins un segment de câble constitué lui-même de torons hélicoïdaux en contact mutuel les uns contre les autres, lesdits segments de câble étant solidaires par leurs extrémités aux zones de liaison qu'ils relient, lesdites zones de liaison étant rigides et liées rigidement aux segments de câbles.

L'invention est remarquable en ce que chaque segment de câble est droit et aligné sur les zones de liaison qu'il relie entre elles, c'est à dire que chaque segment de câble est disposé suivant une ligne droite perpendiculaire à l'axe géométrique de rotation des arbres et passant simultanément par les deux zones de liaison qui sont reliées par ce câble. Une telle disposition est avantageuse à plusieurs titres :
a) Dans les zones de déformation sollicitées en traction, les segments de câble sont soumis à une traction pure qui tend à serrer encore plus les torons les uns contre les autres, ce qui permet la transmission du couple entre les arbres avec une grande rigidité.
b) Dans les zones de déformation sollicitées en compression, les segments de câble sont au contraire soumis à une compression pure qui tend à écarter les torons les uns des autres du fait de leur forme hélicoïdale. Le segment de câble n'oppose alors qu'une faible résistance à la compression, sa longueur diminue et son diamètre augmente.
c) Ainsi, les segments droits de câbles sont très rigides en extension et souples en compression. De ce fait, l'essentiel de la transmission du couple entre les arbres se fait par les zones de déformation travaillant en extension. En contrepartie les zones de déformation travaillant en compression sont déchargées de l'essentiel de l'effort à transmettre et ne sont en conséquence plus susceptibles de flamber et de se rompre comme dans les techniques antérieures. A cette fin, on préférera un rapport entre la longueur des segments de câble dans les zones de déformation et le diamètre de ces câbles inférieur ou égal à 8.

Une compression qui ne s'exerce pas dans l'axe du segment de câble a pour effet de provoquer une flexion de ce câble, ainsi qu'un flambement du câble malgré l'écartement des torons dans le cas où l'effort à transmettre devient trop fort. Ceci se produit dans le cas ou les points de fixation de l'organe flexible, qui sont situés dans les zones de liaison, ne sont pas dans les axes des segments de câble. Pour éviter cet effet négatif limitant le couple transmissible par l'accouplement, on adoptera avantageusement des zones de liaison rigide et liées rigidement aux segments de câble.

Dans une première forme de réalisation, l'organe flexible est une succession monobloc fermée comportant alternativement une zone de liaison à un arbre et une zone de déformation. Cet organe flexible est de préférence carré ; il peut être aussi hexagonal.

Chaque zone de déformation peut être constituée d'au moins un segment de câble dont une extrémité est solidaire d'une zone de liaison à un arbre alors que son autre extrémité est solidaire d'une zone de liaison à l'autre arbre.

Le câble peut être aussi une estrope, c'est à dire un câble formant une boucle fermée, ladite estrope formant un polygone régulier dont les sommets sont arrondis et solidaires chacun et alternativement à une zone de liaison à chacun des arbres, alors que les côtés constituent les segments de câble dans les zones de déformation.

Dans une seconde forme de réalisation, l'organe flexible est constitué d'une pluralité de biellettes comportant chacune elle-même une zone de liaison à un arbre, une zone de déformation et une zone de liaison à l'autre arbre.

Chaque biellette comporte au moins un segment de câble dont une extrémité est solidaire de la zone de liaison à un arbre et l'autre extrémité solidaire de la zone de liaison à l'autre arbre.

Chaque biellette peut aussi comporter un câble fermé ou estrope formant une boucle aplatie. Les extrémités de la boucle sont arrondies et solidaires l'une de la zone de liaison à un arbre et l'autre de la zone de liaison à l'autre arbre, alors que les côtés sont droits et constituent les segments de câble dans les zones déformables.

Dans tous les cas, l'organe flexible sera avantageusement enrobé d'un matériau amortissant et à faible module d'élasticité ou module d'Young, afin de protéger les câbles et segments de câble de l'environnement et particulièrement des poussières et grains de sables qui pourraient se loger entre les torons. Cet enrobage peut être limité aux zones de déformation, mais il sera de préférence étendu à tout l'organe flexible.

Le câble sera de préférence métallique et pris dans un alliage du groupe acier inoxydable austénitique, acier inoxydable martensitique, titane, nickel-chrome.

De tels accouplements présentent l'avantage de permettre un entrainement en rotation de deux arbres avec une grande raideur dans la transmission du couple tout en autorisant un désalignement des arbres sans création de contraintes excessives dans l'organe flexible du fait de la souplesse transversale naturelle des câbles. La raideur désirée des câbles est fixée en fonction des couples et désalignements maximaux de l'application. Elle est aisément modifiable en agissant sur des paramètres simples relatifs à la section, au nombre et à l'arrangement des torons, à la longueur des segments de câbles et au module d'élasticité du matériau desdits câbles.

Un autre avantage de cet accouplement est de présenter une grande fiabilité en fonctionnement, du fait que les câbles comportent une pluralité de torons enroulés en hélices, ces torons pouvant être eux-mêmes composés d'une multitude de brins transmettant chacun une fraction du couple. Ainsi, en cas de rupture l'effort se réparti sur les brins et torons restants.

Par rapport aux solutions classiques, l'invention présente aussi l'avantage d'un gain de masse appréciable et d'un faible coût de réalisation.

L'invention ne saurait être confondue avec l'accouplement à câbles métalliques divulgué par le brevet FR 1 380 185 déjà cité. En effet, les câbles de tels accouplements sont coudés ou divisés en segments formant un coude et présentant une section réduite par rapport à leur longueur, afin de donner à cet accouplement de la souplesse en rotation. Dans la présente invention au contraire, la transmission du couple s'effectue par des segments droits de câbles alignés simultanément sur les deux zones de liaison qu'ils relient chacun, ce qui autorise la transmission d'un couple important avec une grande raideur.

Dans son mode de réalisation comportant des biellettes et des estropes, l'invention ne saurait pas non plus être confondue avec celle du brevet US 4 790 794. En effet, les courroies de tels accouplements sont souples et présentent une section réduite comparée à leur longueur, au contraire des câbles de la présente invention.

L'invention sera mieux comprise et les avantages qu'elle procure apparaîtront plus clairement au vu de la description détaillée de deux exemples de réalisation donnés à titre non limitatif et non exclusif, ainsi que des figures annexées.

La figure 1 est une vue latérale d'un accouplement flexible comportant un organe flexible monobloc et carré.

La figure 2 est une vue en perspective de ce même organe flexible avec un écorché de l'enrobage pour montrer l'estrope et ses moyens de fixation.

La figure 3 illustre un organe flexible comportant des biellettes et des estropes.

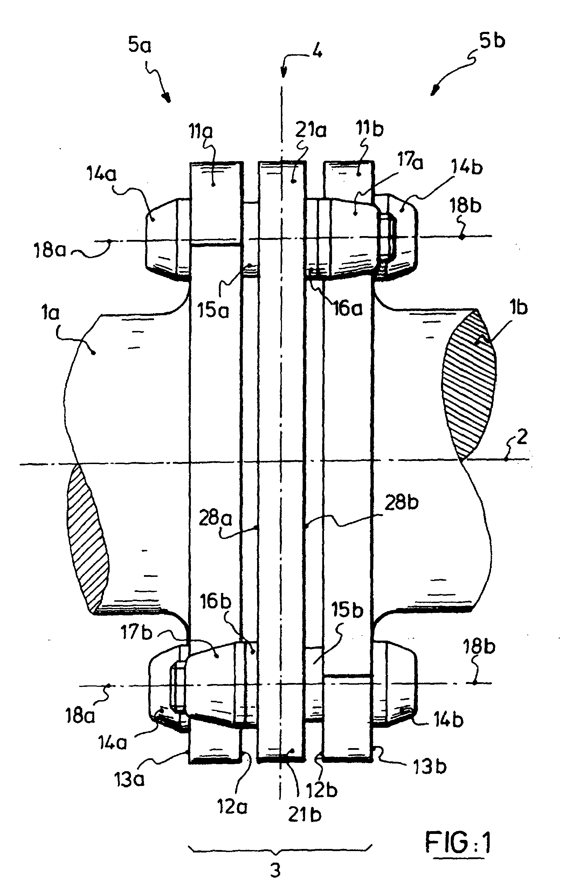

On va maintenant décrire un premier exemple détaillé de réalisation de l'invention, illustré par la figure 1. Les deux demi-arbres 1a et 1b pivotants autour de l'axe géométrique de rotation 2 sont reliés par un accouplement flexible 3 comportant un organe flexible 4 et des moyens de liaison 5a, 5b de l'organe flexible 4 respectivement aux arbres 1a et 1b.

Pour faciliter la compréhension de la description qui va suivre, les références des composants du dispositif se rapportant plus particulièrement à un moyen de liaison 5a ou 5b et un demi-arbre la ou 1b seront indicées avec respectivement les lettres a ou b.

Les moyens de liaison 5a, 5b comportent deux plateaux 11a, 11b en regard l'un de l'autre et solidaires respectivement des arbres 1a et 1b. Les plateaux 11a, 11b comportent chacun une face latérale 12a, 12b perpendiculaire à l'axe 2, ces faces 12a, 12b étant en regard l'une de l'autre. Les plateaux 11a, 11b comportent aussi chacun une seconde face latérale 13a, 13b, ces faces 13a, 13b étant perpendiculaires à l'axe géométrique 2 et opposées respectivement aux faces 12a, 12b.

L'organe flexible 4 est boulonné contre les faces 12a et 12b. Les moyens de liaison 5a, 5b comportent à cet effet des vis 14a, 14b en appui sur les faces 13a, 13b et traversant les plateaux 11a, 11b par des perçages non référencés, et pour chaque vis 14a ou 14b successivement : une rondelle d'épaisseur 15a ou 15b en appui sur la face correspondante 12a ou 12b, une rondelle de serrage 16a ou 16b et un écrou 17a ou 17b. Les zones de liaison 21a, 21b, de l'organe flexible 4 sont serrées entre les rondelles d'épaisseur 15a, 15b et les rondelles de serrage 16a, 16b suivant des directions parallèles à l'axe 2. Pour cela, les axes géométriques 18a, 18b des vis 14a, 14b ainsi que les perçages non référencés des plateaux sont parallèles à l'axe géométrique 2.

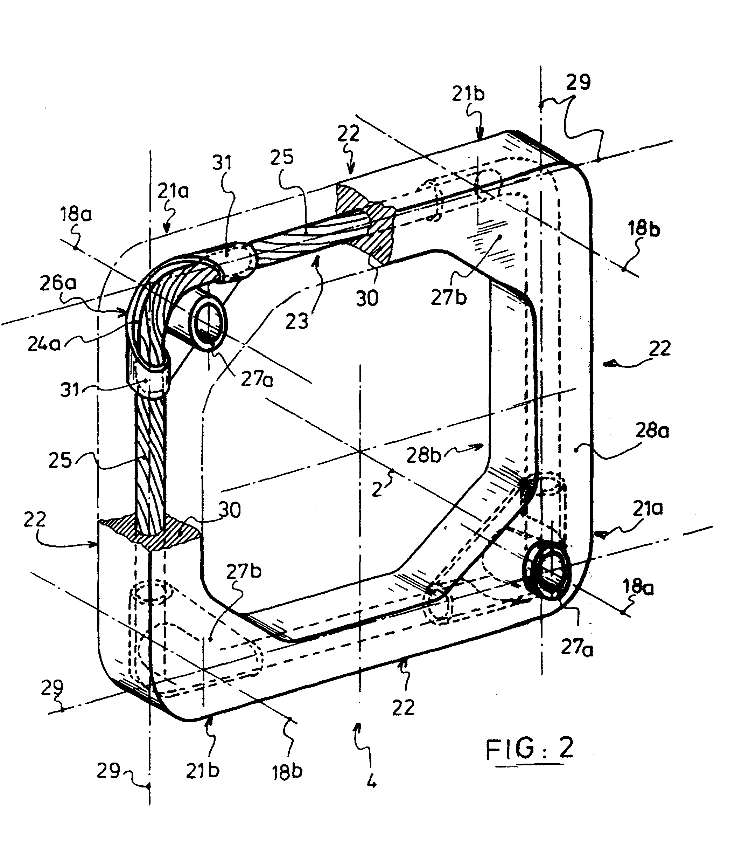

On se reportera maintenant à la figure 2. L'organe flexible 4 comporte une succession fermée de zones de liaison 21a, 21b respectivement aux arbres 1a, 1b, et de zone de déformation 22, chaque zone de liaison 21a ou 21b alternant avec une zone de liaison 21a, 21b et étant reliée à elle par une zone de déformation 22. Un câble fermé ou estrope 23 passe alternativement par les zones de liaison 21a, 21b et les zones de déformation 22. L'estrope 23 a la forme d'un polygone convexe dont les sommets 24a, 24b sont arrondis et traversent les zones de liaison respectivement 21a, 21b et sont solidaires à elles, les côtés de ce même polygone étant constitués par des segments droits 25 de câble 23 formant les zones de déformation 22. Chaque zone de liaison 21a, 21b comporte une agrafe 26a, 26b solidaire du câble 23 par exemple par serrage de celui-ci avec oreilles 31, ladite agrafe 26a, 26b étant elle-même solidaire d'une douille 27a, 27b d'axe géométrique 18a, 18b.

Les douilles 27a, 27b font saillie sur les faces latérales 28a et 28b de l'organe flexible 4, les extrémités desdites douilles 27a, 27b étant planes et perpendiculaires aux axes géométriques 18a, 18b, lesdites faces latérales 28a, 28b délimitant l'organe flexible 4 suivant une direction parallèle à l'axe géométrique 2 respectivement vers les arbres 1a et 1b. On comprend que les vis 14a, 14b non représentées sur la figure 2 passent dans les douilles 27a, 27b et maintiennent l'organe flexible 4 par serrage sur les extrémités desdites douilles.

Ainsi, les segments 25 de câble 23 sont droits et disposés suivant des lignes 29 qui passent simultanément par les zones de liaison 21a et 21b qu'ils relient entre-elles, chaque segment 25 étant en d'autres termes aligné sur les zones de liaison 21a et 21b qu'il relie.

La transmission du couple entre les arbres 1a et 1b se fait par des forces passant par les douilles 27a, les agrafes 26a, les parties droites 25 du câble 23, les agrafes 26b et les douilles 27b. Du fait que les lignes 29 des segments 25 de câble 23 passent par les zones de liaison 21a, 21b, ces segments 25 sont soumis à des forces d'extension ou de compression pure.

En traction, les torons hélicoïdaux du câble 23 s'appuient les uns contre les autres, ce qui empêche l'allongement du câble 23. En compression, ces mêmes torons hélicoïdaux s'écartent les uns des autres et à longueur égale le pas des spires hélicoïdales diminue entrainant la diminution de la longueur du câble. Le câble est donc raide en extension et souple en compression. L'essentiel de l'effort est en conséquence transmis par les segments 25 de câble en extension, alors que les segments 25 en compression raccourcissent et ne sont en conséquence plus que le siège de contraintes réduites, ce qui résout le problème de l'art antérieur.

L'organe flexible 4 sera avantageusement enrobé par un matériau 30 à faible module d'élasticité ou module d'Young et ayant de préférence un pouvoir amortissant, par exemple un élastomère ou un alliage d'aluminium de fonderie pris dans le groupe AS, AG, AU, séries US A100, A200, A300, A500.

Cet enrobage protège le câble 23 d'un environnement agressif pour le matériau dans lequel il est constitué, empêche les poussières de pénétrer entre les torons et amorti les résonnances qui pourraient apparaitre dans les spires dudit câble 23, sous l'effet en particulier de la flexion alternée de l'organe flexible du fait du désalignement des arbres. Dans un mode de réalisation préféré, l'enrobage sera réalisé par surmoulage.

En pratique, on préférera un organe flexible 4 de forme carrée ou hexagonale, les axes 18a, 18b étant inscrits sur un cercle centré sur l'axe géométrique 2 et dont les côtés sont égaux, le câble 23 contournant par l'extérieur les douilles 27a, 27b. L'ensemble est surmoulé dans de l'alliage léger et forme un bloc compact évidé au centre et délimité axialement par les deux faces latérales 28a et 28b qui sont planes et perpendiculaires à l'axe géométrique 2, les douilles 27a, 27b faisant saillie sur lesdites faces latérales 28a,28b, pour permettre le maintien par serrage de l'organe flexible 4.

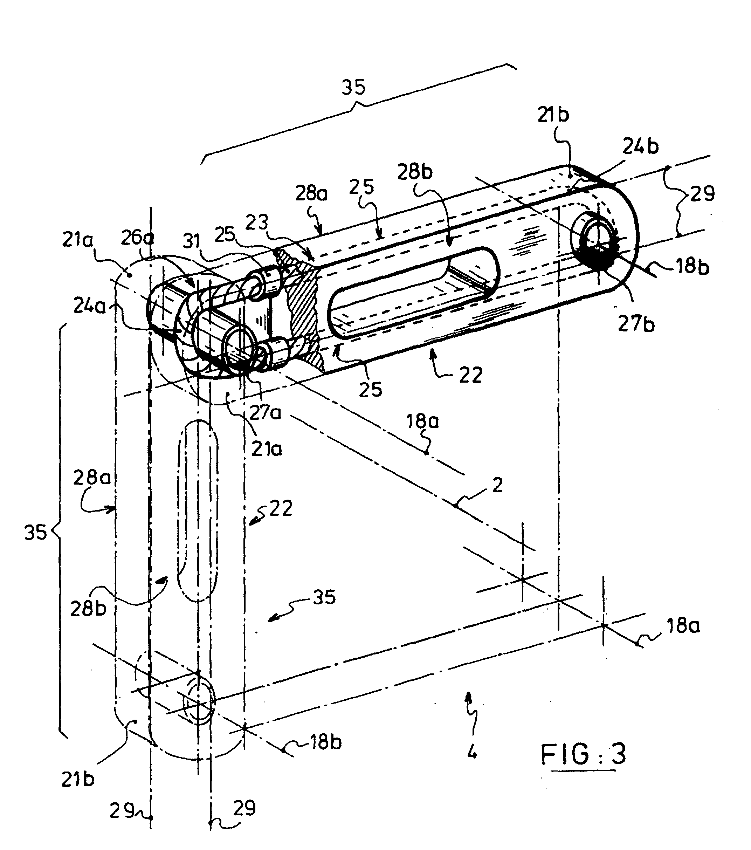

On se reportera maintenant à la figure 3. L'organe flexible 4 comporte une pluralité de biellettes 35 comportant chacune une zone de liaison 21a à l'arbre la non représenté sur la figure 3, une zone de liaison 21b à l'arbre 1b également non représenté, ainsi qu'une zone de déformation 22 reliant lesdites zones de liaison 21a et 21b.

Chaque biellette 35 est délimitée latéralement, c'est à dire dans une direction parallèle à l'axe géométrique 2, par une première face latérale 28a tournée du côté de l'arbre et non représentée, et à l'opposé par une seconde face latérale 28b tournée du côté de l'autre arbre 1b. Les zones de liaison 21a, 21b des biellettes 35 comportent chacune une douille 27a, 27b d'axe géométrique 18a, 18b, lesdites douilles 27a, 27b traversant de part en part lesdites zones de liaison 21a, 21b et faisant saillie sur lesdites faces latérales 28a, 28b.

Chaque biellette 35 comporte aussi au moins un câble 23 ou estrope ayant la forme d'une boucle allongée dont les extrémités 24a, 24b sont arrondies, contournent les douilles 27a, 27b et sont solidaires desdites douilles. La liaison sera par exemple réalisée par des agrafes 26a, 26b solidaires des douilles respectivement 27a, 27b et comportant des oreilles 31 rabattues sur le câble 23 et maintenant celui-ci par serrage.
Les côtés de la boucle de câble 23 sont droits et constituent deux segments 25 de câble parallèles et disposés suivant des lignes droites 29 perpendiculaires à l'axe 2 et passant simultanément par les deux zones de liaison 21a, 21b. On comprend que les segments 25 de câble se comportent de la même façon que dans l'organe flexible 4 monobloc de l'exemple précédent, vis à vis des efforts en extension et en compression résultant de la transmission du couple entre les arbres 1a et 1b.

Les biellettes 35 sont maintenues serrées l'une contre l'autre par leurs zones de liaison 21a, 21b, respectives, la zone de liaison 21a d'une biellette 35 étant maintenue contre la zone de liaison 21a d'une première biellette adjacente, alors que la zone de liaison 21b de cette même biellette 35 est maintenue contre la zone de liaison 21b de l'autre biellette 35 adjacente, l'ensemble des biellettes 35 formant un polygone convexe dont les axes 18a, 18b constituant les sommets et les zones de déformation 22 des côtés.

Dans un mode de réalisation préféré, les axes 18a ou 18b de deux biellettes 35 adjacentes par la zone de liaison 21a ou 21b correspondantes sont alignés, les douilles 27a ou 27b étant dans le prolongement l'une de l'autre et appuyées l'une sur l'autre pour permettre le maintien simultanément par un seul serrage, par exemple par une vis ou un boulon passant à l'intérieur des douilles.

L'invention ne se limite pas aux réalisations présentées, mais en couvre au contraire toutes les variantes qui pourraient leur être apportées sans sortir de leur cadre ni de leur esprit.

Ainsi l'estrope peut être remplacée par des tronçons de câble droits séparés entre eux et solidaires par leurs extrémités aux zones de liaison. Ce câble peut être composé d'un grand nombre de torons à un seul brin ou au contraire d'un nombre réduit de torons multibrins.

La liaison du câble ou des tronçons de câble avec les zones de liaison peut aussi se faire par sertissage, soudage ou brasage, ou par serrage dans des gorges au diamètre du câble avec des étriers vissés, ce dernier mode de réalisation étant toutefois mieux adapté aux câbles en estrope ainsi qu'aux organes flexibles comportant deux ou plusieurs câbles disposés parallèlement entre eux.

## Revendications

1. Dispositif d'accouplement flexible de deux arbres tournants, lesdits arbres (1a, 1b) d'axe géométrique commun (2) étant susceptibles de désalignement, ledit dispositif d'accouplement (3) comportant lui-même un organe flexible (4) ainsi que des moyens de liaison (5a, 5b) de l'organe flexible (4) aux arbres tournants (1a, 1b) ledit organe flexible (4) comportant des zones de liaison (21a, 21b) respectivement aux arbres (1a, 1b), lesdites zones de liaison (21a,21b) étant reliées entre elles deux à deux par des zones de déformation (22) disposées entre lesdites zones de liaison (21a,21b) et solidaires avec elles, lesdites zones de déformation (22) comportant chacune au moins un segment (25) de câble (23), ledit câble (23) étant constitué de torons en contact mutuel les uns contre les autres, les zones de liaison (21a,21b) étant rigides et liées rigidement aux segments de câble (25), les segments de câble (25) reliant entre elles les zones de liaison (21a,21b), **caractérisé en ce que** chaque segment de cable (24) est droit et disposé suivant une ligne droite (29) perpendiculaire à l'axe géométrique de rotation (2°, ladite ligne droite (29) passant simultanément par les deux zones de liaison (21a,21b) reliées par ledit câble (23).

2. Dispositif conforme à la revendication 1, **caractérisé en ce que** le rapport entre la longueur des câbles (23) dans les zones de déformation (22) et le diamètre desdits câbles est inférieur ou égal à 8, afin d'éviter le flambement des câbles en compression.

3. Dispositif conforme à la revendication 1 ou 2, **caractérisé en ce que** l'organe flexible (4) est une succession monobloc fermée comportant alternativement une zone de liaison (21a, 21B) et une zone de déformation (22).

4. Dispositif conforme à la revendication 3, **caractérisé en ce que** les zones de déformation (22) comportent chacune au moins un segment de câble (25) dont les extrémités sont solidaires des zones de liaison (21a, 21b).

5. Dispositif conforme à la revendication 3, **caractérisé en ce que** le câble (23) est une estrope formant un polygone convexe dont les sommets (24a, 24b) sont arrondis et solidaires des zones de liaison (21a, 21b) et dont les côtés sont des segments (25) droits constituant les zones de déformation (22).

6. Dispositif conforme à la revendication 1 ou 2, **caractérisé en ce que** l'organe flexible (4) comporte une pluralité de biellettes (35) comportant chacune elles-mêmes deux zones de liaison (21a) et (21b) reliées par une zone de déformation (22).

7. Dispositif conforme à la revendication 6, **caractérisé en ce que** les zones de déformation (22) comportent chacune au moins un segment (25) de câble (23) dont les extrémités sont solidaires des zones de liaison (21a, 21b).

8. Dispositif conforme à la revendication 6, **caractérisé en ce que** chaque biellette (35) comporte au moins un câble (23) fermé ou estrope, ledit câble (23) formant une boucle aplatie dont les extrémités (24a, 24b) sont arrondies et solidaires des zones de liaison (21a, 21b) alors que les côtés sont des segments (25) droits constituant les zones de déformation (22).

9. Dispositif conforme à l'une quelconque des revendications 1 à 8, **caractérisé en ce que** l'organe flexible (4) est enrobé par surmoulage d'un matériau (30) à faible module d'élasticité.

10. Dispositif conforme à l'une quelconque des revendications 1 à 9, **caractérisé en ce que** les câbles (23) sont métalliques et pris dans un alliage du groupe acier inoxydable austénitique, acier inoxydable martensitique, titane, nickel-chrome.

## Patentansprüche

1. Elastische Kupplungsvorrichtung für zwei drehende Wellen, wobei diese Wellen (1a, 1b) eine gemeinsame geometrische Achse (2) haben und eine Fehlausrichtung erfahren können, wobei die Kupplungsvorrichtung (3) selbst ein elastisches Organ (4) sowie Verbindungsmittel (5a, 5b) zum Verbinden des elastisches Organs (4) mit den drehenden Wellen (1a, 1b) aufweist und das elastische Organ (4) Verbindungszonen (21a, 21b) für die Verbindung mit den betreffenden Wellen (1a, 1b) besitzt und diese Verbindungszonen (21a, 21b) über Verformungszonen (22) miteinander verbunden sind, die zwischen den Verbindungszonen (21a, 21b) angeordnet und mit diesen fest verbunden sind, wobei die Verformungszonen (22a, 22b) jeweils wenigstens ein Segment (25) eines Kabels (23) umfassen und das Kabel (23) aus Litzen besteht, die in Kontakt miteinander stehen, wobei die Verbindungszonen (21a, 21b) starr sind und mit den Kabelsegmenten (25) starr verbunden sind und die Kabelsegmente (25) die Verbindungszonen (21a, 21b) untereinander verbinden, **dadurch gekennzeichnet, daß** jedes Kabelsegment (25) geradlinig ist und entlang einer geraden Linie (29) angeordnet ist, die senkrecht zu der geometrischen Rotationsachse (2) verläuft, wobei die genannte gerade Linie (29) gleichzeitig durch die beiden Verbindungszonen (21a, 21b) verläuft, die durch das Kabel (23) miteinander verbunden sind.

2. Vorrichtung nach Anspruch 1, **dadurch gekennzeichnet, daß** das Verhältnis zwischen der Länge der Kabel (23) in den Verbindungszonen (22) und dem Durchmesser der Kabel kleiner oder gleich 8 ist, um das Knicken der Kabel bei Kompression zu verhindern.

3. Vorrichtung nach Anspruch 1 oder 2, **dadurch gekennzeichnet, daß** das elastische Organ (4) eine geschlossene Monoblockfolge ist, die abwechselnd eine Verbindungszone (21a, 21b) und eine Verformungszone (22) aufweist.

4. Vorrichtung nach Anspruch 3, **dadurch gekennzeichnet, daß** die Verformungszonen (22) jeweils wenigstens ein Kabelsegment (25) aufweisen, dessen Enden mit den Verbindungszonen (21a, 21b) fest verbunden sind.

5. Vorrichtung nach Anspruch 3, **dadurch gekennzeichnet, daß** das Kabel (23) ein Stropp ist, der ein konvexes Polygon bildet, dessen Ecken (24a, 24b) abgerundet und mit den Verbindungszonen (21a, 21b) fest verbunden sind und dessen Seiten geradlinige Segmente (25) sind, die die Verformungszonen (22) bilden.

6. Vorrichtung nach Anspruch 1 oder 2, **dadurch gekennzeichnet, daß** das elastische Organ (4) mehrere Schwingarme (35) aufweist, die ihrerseits jeweils zwei Verbindungszonen (21a, 21b) umfassen, die durch eine Verformungszone (22) verbunden sind.

7. Vorrichtung nach Anspruch 6, **dadurch gekennzeichnet, daß** die Verformungszonen (22) jeweils wenigstens ein Segment (25) eines Kabels (23) aufweisen, deren Enden mit den Verbindungszonen (21a, 21b) fest verbunden sind.

8. Vorrichtung nach Anspruch 6, **dadurch gekennzeichnet, daß** jeder Schwingarm (25) wenigstens ein Kabel (23) aufweist, das geschlossen oder ein Stropp ist, wobei dieses Kabel (23) eine flache Schleife bildet, deren Enden (24a, 24b) abgerundet und mit den Verbindungszonen (21a, 21b) fest verbunden sind, während die Seiten geradlinige Segmente (25) sind, die die Verformungszonen (22) bilden.

9. Vorrichtung nach einem der Ansprüche 1 bis 8, **dadurch gekennzeichnet, daß** das elastische Organ (4) durch Umspritzen eines Werkstoff (30) mit niedrigem Elastizitätsmodul ummantelt ist.

10. Vorrichtung nach einem der Ansprüche 1 bis 9, **dadurch gekennzeichnet, daß** die Kabel (23) aus Metall bestehen, ausgewählt aus einer Legierung der Gruppe mit nichtrostendem austenitischen Stahl, nichtrostenden martensitischen Stahl, Titan und Nickelchrom.

## Claims

1. Flexible coupling device for two rotating shafts, the said shafts (1a, 1b) which have a common geometric axis (2) being capable of misalignment, the said coupling device (3) itself comprising a flexible member (4) and means (5a, 5b) of connecting the flexible member (4) to the rotating shafts (1a, 1b), the said flexible member (4) comprising regions (21a, 21b) of connection to the respective shafts (1a, 1b), the said connecting regions (21a, 21b) being connected together in pairs by deformation regions (22) arranged between the said connecting regions (21a, 21b) and secured to them, the said deformation regions (22) each comprising at least one length (25) of cable (23), the said cable (23) consisting of strands in contact with one another, the connecting regions (21a, 21b) being rigid and rigidly connected to the lengths of cable (25), the lengths of cable (25) connecting the connecting regions (21a, 21b) together, **characterized in that** each length of cable (24) is straight and arranged in a straight line (29) perpendicular to the geometric axis of rotation (2), the said straight line (29) passing simultaneously through the two connecting regions (21a, 21b) connected via the said cable (23).

2. Device according to Claim 1, **characterized in that** the ratio between the length of the cables (23) in the deformation regions (22) and the diameter of the said cables is less than or equal to 8, so as to prevent the cables from buckling in compression.

3. Device according to Claim 1 or 2, **characterized in that** the flexible member (4) is a closed one-piece succession comprising, alternately, a connecting region (21a, 21b) and a deformation region (22).

4. Device according to Claim 3, **characterized in that** the deformation regions (22) each comprise at least one length of cable (25) the ends of which are secured to the connecting regions (21a, 21b).

5. Device according to Claim 3, **characterized in that** the cable (23) is a strop forming a convex polygon the vertices (24a, 24b) of which are rounded and secured to the connecting regions (21a, 21b) and the sides of which are straight lengths (25) constituting the deformation regions (22).

6. Device according to Claim 1 or 2, **characterized in that** the flexible member (4) comprises a number of link rods (35) each themselves comprising two connecting regions (21a) and (21b) connected by a deformation region (22).

7. Device according to Claim 6, **characterized in that** the deformation regions (22) each comprise at least one length (25) of cable (23) the ends of which are secured to the connecting regions (21a, 21b).

8. Device according to Claim 6, **characterized in that** each link rod (35) comprises at least one closed cable (23) or strop, the said cable (23) forming a flattened loop the ends (24a, 24b) of which are rounded and secured to the connecting regions (21a, 21b) while the sides are straight lengths (25) constituting the deformation regions (22).

9. Device according to any one of Claims 1 to 8, **characterized in that** the flexible member (4) is coated by overmoulding with a material (30) of low elastic modulus.

10. Device according to any one of Claims 1 to 9, **characterized in that** the cables (23) are made of metal and taken from an alloy in the group of austenitic stainless steel, martensitic stainless steel, titanium and nickel-chrome.
